(19) Europäisches Patentamt

European Patent Office

Office européen des brevets

(11) Veröffentlichungsnummer: **0 512 127 A1**

# (12) EUROPÄISCHE PATENTANMELDUNG

(21) Anmeldenummer: **91107130.6**

(22) Anmeldetag: **02.05.91**

(51) Int. Cl.5: **A43D 111/00**, A43D 11/14,
A43D 95/12, B65G 47/90,
B65G 43/08, B23Q 7/16

(43) Veröffentlichungstag der Anmeldung:
**11.11.92 Patentblatt 92/46**

(84) Benannte Vertragsstaaten:
**DE FR GB**

(71) Anmelder: **SCHÖN & CIE. AG**
**Im Gehörnerwald 2**
**W-6780 Pirmasens 17(DE)**

(72) Erfinder: **Hartmann, Willi**
**Schlossgässel 2**
**W-6786 Lemberg(DE)**
Erfinder: **Reinitz, Wolfgang**
**Triftstrasse 21**
**W-6781 Donsieders(DE)**
Erfinder: **Schwarz, Thomas**
**Baumgartenstrasse 15**
**W-6780 Pirmasens 19(DE)**

(74) Vertreter: **Schaafhausen, Ludwig Richard,**
**Dipl.-Phys. et al**
**KEIL & SCHAAFHAUSEN Patentanwälte**
**Eysseneckstrasse 31**
**W-6000 Frankfurt am Main 1(DE)**

(54) **Schuhbehandlungsgerät mit Beschickungsvorrichtung.**

(57) Es wird ein Schuhbehandlungsgerät (1) mit einer Einrichtung (3) zum Transport von Schuhen (9, 9', 9'') von wenigstens einer Anlieferstelle (6, 6' usw.) durch das Schuhbehandlungsgerät (1) zu einer Abgabestelle (7) vorgeschlagen, bei dem eine selbsttätige Vorrichtung (8) zur Beschickung der Anlieferstelle (6, 6' usw.) mit Schuhen (9, 9') vorgesehen ist. Der Anlieferstelle (6, 6' usw.) sind Mittel (10) zur Erfassung des Belegungszustandes der jeweiligen Anlieferstelle (6, 6' usw.) zugeordnet. Mit Hilfe einer Steuerung der Beschickungsvorrichtung in Abhängigkeit der Ausgangsgröße der Erfassungsmittel (10) wird dafür Sorge getragen, daß jeweils nur einer unbelegten Anlieferstelle (6, 6' usw.) Schuhe zugeführt werden. Das Schuhbehandlungsgerät findet insbesondere Anwendung zur Wärmebehandlung von aufgeleisteten Schuhen im Schuhherstellungsprozeß.

Fig. 1

EP 0 512 127 A1

Die Erfindung betrifft ein Schuhbehandlungsgerät, insbesondere Wärmebehandlungsgerät für aufgeleistete Schuhe, mit einer Einrichtung zum Transport der ggf. aufgeleisteten Schuhe von wenigstens einer Anlieferstelle zu wenigstens einer Abgabestelle, wobei z.B. jeder Anlieferstelle jeweils ein Transportband oder - bei gemeinsamem Transportband - ein durch Abteilbleche gebildeter Transportkanal zugeordnet ist, und mit einer Vorrichtung zum Beschicken der wenigstens einen Anlieferstelle mit den ggf. aufgeleisteten Schuhen.

Bei einem auch als "Heatsetter" bezeichneten Wärmebehandlungsgerät für aufgeleistete Schuhe läuft ein Transportband durch einen aufgeheizten Raum. Vor und hinter diesem Raum ragt das Transportband nach außen und bildet damit eine Anlieferstelle und eine Abgabestelle. Die Anlieferstelle kann auch ähnlich einer Tischplatte ausgebildet sein und die Übergabe der Schuhe auf das Transportband mit einem Einschieber erfolgen. In der Praxis sind bei einem Heatsetter in der Regel mehrere Transportbänder nebeneinander angeordnet oder ist ein breites Transportband durch Abteilbleche in mehrere Transportkanäle abgeteilt.

Eine Beschickung eines derartigen Schuhbehandlungsgerätes von Hand ist kostenaufwendig. Unter Umständen leidet auch der Durchsatz des Gerätes.

Bei einer selbsttätigen Beschickung besteht das Problem, daß ein Schuh immer nur dort und nur dann zugeführt wird, wenn die Ablieferstelle oder eine der Ablieferstellen unbelegt ist.

Der Erfindung liegt die Aufgabe zugrunde, ein Schuhbehandlungsgerät der eingangs genannten Art zu schaffen, welches eine verbesserte Beschickung gewährleistet.

Diese Aufgabe wird bei einem Schuhbehandlungsgerät der eingangs genannten Art im wesentlichen insbesondere dadurch gelöst, daß der Anlieferstelle Mittel zur Erfassung des Belegungszustandes der Anlieferstelle zugeordnet sind.

Ein Schuhbehandlungsgerät mit diesen Merkmalen bietet die Voraussetzung für eine weitgehend optimale Beschickung der Anlieferstelle mit Schuhen. Dadurch, daß Mittel zur Erfassung des Belegungszustandes der Anlieferstelle vorgesehen sind, kann jedenfalls eine Doppelbelegung, aber ggf. auch eine Nichtbelegung der jeweiligen Anlieferstelle vermieden und die Beschickung der Anlieferstelle nach Maßgabe der jeweiligen Taktzeiten in Abhängigkeit vom Belegungszustand durchgeführt werden. Hierdurch ist eine störungsfreie und wirtschaftliche Ausnutzung des Schuhbehandlungsgerätes und insoweit eine rationelle Fertigung der Schuhe gewährleistet.

Vorteilhaft erweist sich die Maßnahme, der Beschickungsvorrichtung Steuerungsmittel zuzuordnen, die mit der Ausgangsgröße der Erfassungsmittel des Belegungszustandes der Anlieferstelle beaufschlagbar sind. Hierdurch wird die Voraussetzung geschaffen, die Beschickungsvorrichtung unmittelbar oder mittelbar in Abhängigkeit vom Belegungszustand der Anlieferstelle zu steuern, derart daß der Anlieferstelle bzw. den Anlieferstellen jeweils ein Schuh zu einem optimalen Zeitpunkt zugeführt wird.

In einer weiteren vorteilhaften Ausgestaltung der Erfindung wird eine Steuerung der Beschickungsvorrichtung in Abhängigkeit der Ausgangsgröße der Mittel zur Erfassung des Belegungszustandes der Anlieferstelle derart durchgeführt, daß die wenigstens eine Anlieferstelle nur dann selbsttätig mit einem Schuh beschickt wird, wenn sie unbelegt ist. Hierdurch werden Störungen des Fertigungsprozesses der Schuhe weitestgehend vermieden.

In einer vorteilhaften Weiterbildung der Erfindung, in welcher das Schuhbehandlungsgerät mehrere Anlieferstellen aufweist, sind jeder einzelnen Anlieferstelle Mittel zur Erfassung des Belegungszustandes der Anlieferstelle zugeordnet. Diese Maßnahme ermöglicht eine optimierte, individuelle Beschickung einzelner Anlieferstellen, die mit mehreren Transportbändern oder Transportkanälen ausgestattet sind.

Nach einer vorteilhaften Ausgestaltung eines Schuhbehandlungsgerätes mit mehreren Anlieferstellen wird die Steuerung der Beschickungsvorrichtung in Abhängigkeit der Ausgangsgröße der Mittel zur Erfassung des Belegungszustandes der Anlieferstellen derart durchgeführt, daß im Falle der Erfassung der Belegung einer Anlieferstelle eine andere unbelegte Anlieferstelle beschickt wird.

Es liegt auch im Rahmen der Erfindung, die Beschickungsvorrichtung derart zu steuern, daß im Falle und für die Dauer der Belegung sämtlicher Anlieferstellen die Beschickungsvorrichtung in eine Wartestellung überführt wird. Dadurch ist auch für den Fall fertigungsbedingter Unterbrechungen oder Störungen im Fertigungsablauf der Schuhe für eine prozeßparametergerechte Beschickung der Anlieferstelle und einen reibungslosen Wiederanlauf des Fertigungsprozesses nach Beendigung der Unterbrechung Sorge getragen.

In vorteilhafter Weise kann die Beschickungsvorrichtung als Industrieroboter mit Mitteln zur Handhabung von Schuhen, bspw. einem Roboterarm, ausgebildet sein.

Die Mittel zur Erfassung des Belegungszustandes können als vorzugsweise berührungslos arbeitende Meßfühlereinrichtung, z.B. mit einer Endschaltereinrichtung mit Tastfühler, einer Fotozelleneinrichtung mit Sender und Empfänger, einem Ultraschallmelder, einem Luftmeßfilter und/oder einem kapazitiven Melder ausgestattet sein.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

Fig. 1    ein Schuhbehandlungsgerät nach der Erfindung schematisch in der Seitenansicht, und

Fig. 2    das Gerät von Fig. 1 schematisch in Draufsicht.

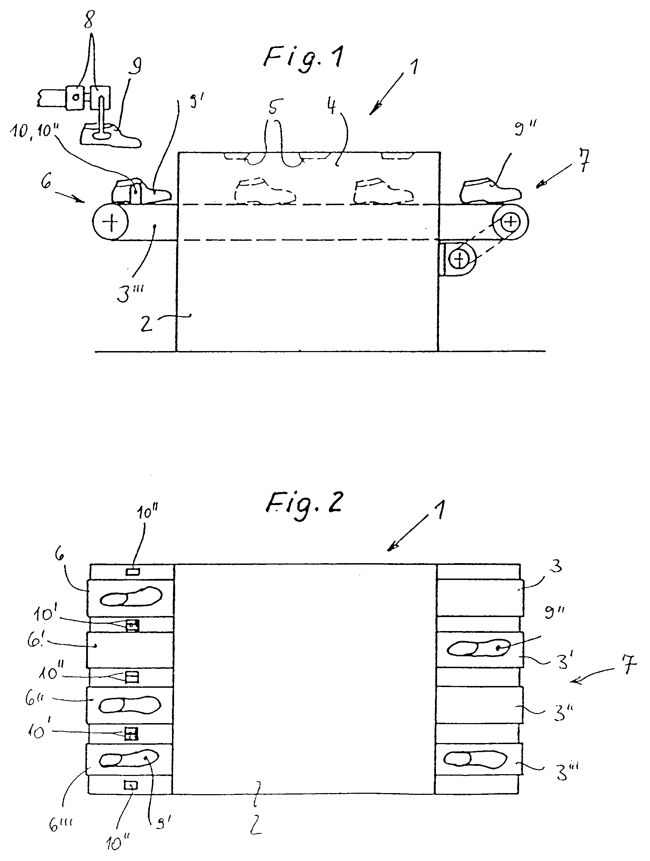

Ein z.B. als Wärmebehandlungsgerät für aufgeleistete Schuhe (Heatsetter) ausgebildetes Schuhbehandlungsgerät 1 besteht gemäß Fig. 1 und 2 im wesentlichen aus einem Gehäuse 2 und einem oder mehreren Transportbändern 3, 3' usw., die auch als Transportkanäle ausgebildet sein können. In einem von dem Gehäuse 2 umschlossenen Heizkanal 4 sind ein oder mehrere Heizelemente 5 angeordnet.

An den von den vorderen, aus dem Gehäuse 2 herausragenden Abschnitten der Transportbänder 3, 3' usw. gebildeten Anlieferstelle(n) 6, 6' usw. und der von den hinteren, aus dem Gehäuse 2 herausragenden Abschnitten der Transportbänder 3, 3' usw. gebildeten Abgabestellen 7 können aufgeleistete Schuhe 9, 9', 9'' auf die Transportbänder 3, 3' usw. aufgelegt und nach der Wärmebehandlung von diesen wieder weggenommen werden. Eine Beschickungsvorrichtung 8, die im vorliegenden Beispiel als Industrieroboter mit Roboterarm ausgebildet ist, und Mittel zur Handhabung, d.h. zum Ergreifen und zum Ablegen von unbehandelten aufgeleisteten Schuhen 9 aufweist, dient zum selbsttätigen Beschicken der Anlieferstellen 6, 6' usw..

Jede einzelne Anlieferstelle 6, 6' usw. ist mit einer Meßfühlereinrichtung 10 versehen, die geeignet ist, den Belegungszustand der einzelnen Anlieferstellen 6, 6' usw. zu erfassen. Die Meßfühlereinrichtung 10 ist im vorliegenden Ausführunsbeispiel mit einer Fotozelleneinrichtung bestehend aus einem Sender 10' und einem Empfänger 10'' ausgebildet. Als alternative Möglichkeiten können aber auch Meßfühlereinrichtungen 10 vorgesehen sein, die als Endschaltereinrichtung mit Tastfühler, als Ultraschallmelder, Luftmeßfühler und/oder kapazitiver Melder ausgebildet sind.

Die Ausgangssignale der Meßfühlereinrichtung 10 werden in der Zeichnung nicht dargestellten Steuerungsmitteln zugeführt, die für eine entsprechende Steuerung der Beschickungsvorrichtung 8 Sorge tragen. Die Steuerung erfolgt in der Weise, daß die Beschickungsvorrichtung 8 eine der Anlieferstellen 6, 6' usw. nur einen Schuh zuführt, wenn die Meßfühlereinrichtung 10 eine Nichtbelegung dieser Anlieferstelle 6, 6' usw. gemeldet hat. Wird das Wärmebehandlungsgerät 1, wie im dargestellten Fall, mit mehreren Anlieferstellen 6, 6' usw. verwendet, findet die Steuerung der Beschickungsvorrichtung 8 vorteilhaft in der Weise statt, daß jeweils eine freie, insbesondere die nächstliegende freie Anlieferstelle 6, 6' usw. mit einem zu behandelnden Schuh 9' beschickt wird. Ist hingegen bspw. infolge eines fertigungs- oder störungsbedingten Stillstandes des Transportbandes 3 keine der Anlieferstellen 6, 6' usw. frei, wird die Beschickungsvorrichtung 8 zunächst in eine Wartestellung gebracht, bis wieder eine der Anlieferstellen 6, 6' usw. frei ist.

Die Beschickungsvorrichtung 8 versetzt mit ihrem Roboterarm den unbehandelten Schuh 9' auf einer der unbelegten Anlieferstellen 6, 6' usw. ab, so daß der Schuh 9' mittels des Transportbandes 3 das Gehäuse 2 durchläuft. Anschließend kann der behandelte Schuh 9'' von der Abgabestelle 7 der Transportbänder 3, 3' usw. entfernt und dem weiteren Fertigungsprozeß zugeführt werden. Es versteht sich, daß auch andere bekannte Transportvorrichtungen statt der Transportbänder 3, 3' usw. eingesetzt werden können.

Bezugszeichenliste:

| | |
|---|---|
| 1 | Wärmebehandlungsgerät |
| 2 | Gehäuse |
| 3, 3' usw. | Transportbänder |
| 4 | Heizkanal |
| 5 | Heizelemente |
| 6, 6' usw. | Anlieferstellen |
| 7 | Angabestelle |
| 8 | Beschickungsvorrichtung |
| 9, 9' usw. | Schuh |
| 10 | Meßfühlereinrichtung |
| 10' | Sender |
| 10'' | Empfänger |

**Patentansprüche**

1.    Schuhbehandlungsgerät, insbesondere Wärmebehandlungsgerät (1) für aufgeleistete Schuhe, mit einer Einrichtung (3) zum Transport der ggf. aufgeleisteten Schuhe (9, 9', 9'') von wenigstens einer Anlieferstelle (6, 6' usw.) zu wenigstens einer Abgabestelle (7), wobei z.B. jeder Anlieferstelle (6, 6' usw.) jeweils ein Transportband (3) oder - bei gemeinsamem Transportband (3) - ein durch Abteilbleche gebildeter Transportkanal zugeordnet ist, und mit einee Vorrichtung (8) zum Beschicken der wenigsten einen Anlieferstelle (6, 6' usw.) mit den ggf. aufgeleisteten Schuhen (9, 9'), dadurch gekennzeichnet, daß der Anlieferstelle (6, 6' usw.) Mittel (10, 10', 10'') zur Erfassung des Belegungszustandes der Anlieferstelle (6, 6' usw.) zugeordnet sind.

Empfänger (10''), einem Ultraschallmelder, einem Luftmeßfühler und/oder einem kapazitiven Melder ausgestattet sind.

2. Schuhbehandlungsgerät nach Anspruch 1, dadurch gekennzeichnet, daß der Beschickungsvorrichtung (8) Steuerungsmittel zugeordnet sind, die mit der Ausgangsgröße der Erfassungsmittel (10, 10', 10'') beaufschlagbar sind.

3. Schuhbehandlungsgerät nach Anspruch 1 oder 2, gekennzeichnet durch eine Steuerung für die Beschickungsvorrichtung (8) in Abhängigkeit der Ausgangsgröße der Erfassungsmittel (10, 10', 10'') derart, daß die wenigstens eine Anlieferstelle (6, 6' usw.) nur dann mit einem Schuh (9, 9') beschickt wird, wenn sie unbelegt ist.

4. Schuhbehandlungsgerät nach einem der vorhergehenden Ansprüche mit mehreren Anlieferstellen (6, 6' usw.), dadurch gekennzeichnet, daß jede einzelnen Anlieferstelle (6, 6' usw.) Erfassungsmittel (10, 10', 10'') zugeordnet sind.

5. Schuhbehandlungsgerät nach Anspruch 4, gekennzeichnet durch eine Steuerung für die Beschickungsvorrichtung (8) in Abhängigkeit der Ausgangsgröße der Erfassungsmittel (10, 10', 10'') derart, daß im Falle der Belegung einer Anlieferstelle (6, 6' usw.) ggf. eine andere unbelegte Anlieferstelle (6, 6' usw.) beschickt wird.

6. Schuhbehandlungsgerät nach Anspruch 4 oder 5, gekennzeichnet durch eine Steuerung für die Beschickungsvorrichtung (8) in Abhängigkeit der Ausgangsgröße der Erfassungsmittel (10, 10', 10'') derart, daß im Falle und für die Dauer der Belegung sämtlicher Anlieferstellen (6, 6' usw.) die Beschickungsvorrichtung (8) in eine Wartestellung überführt wird.

7. Schuhbehandlungsgerät nach einem der vorhergehenden Ansprüche, dadurch gekennzeichnet, daß die Beschickungsvorrichtung (8) als Industrieroboter mit Mitteln zur Handhabung von Schuhen, bspw. einem Roboterarm, ausgebildet ist.

8. Schuhbehandlungsgerät nach einem der vorhergehenden Ansprüche, dadurch gekennzeichnet, daß die Erfassungsmittel (10, 10', 10'') als vorzugsweise berührungslos arbeitende Meßfühlereinrichtung (10), z.B. mit einer Endschaltereinrichtung mit Tastfühler, einer Fotozelleneinrichtung mit Sender (10') und

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | US-A-4 765 011 (LEEPER)<br>* Spalte 2, Zeile 25 - Spalte 3, Zeile 15 *<br>* Spalte 6, Zeile 51 - Zeile 53; Abbildungen 1,2 *<br>--- | 1-8 | A43D111/00<br>A43D11/14<br>A43D95/12<br>B65G47/90<br>B65G43/08<br>B23Q7/16 |
| Y | DE-A-2 522 579 (DANEPAK LTD.)<br>* Ansprüche 1-5; Abbildungen 1-3 *<br>--- | 1-8 | |
| A | FR-A-2 566 635 (HUBER)<br>* Seite 4, Zeile 35 - Seite 5, Zeile 6; Abbildung 2 *<br>--- | 1 | |
| A | EP-A-0 340 390 (SCHÖN & CIE GMBH)<br>* Spalte 5, Zeile 2 - Zeile 17; Anspruch 4; Abbildungen 1,2 *<br>--- | 1 | |
| A | EP-A-0 128 756 (USM CORPORATION)<br>* Zusammenfassung; Abbildungen 1,2 *<br>----- | 1 | |

**RECHERCHIERTE SACHGEBIETE (Int. Cl.5 )**

A43D
B65G
B23Q                    .

Der vorliegende Recherchenbericht wurde für alle Patentansprüche erstellt

| Recherchenort | Abschlußdatum der Recherche | Prüfer |
|---|---|---|
| DEN HAAG | 21 NOVEMBER 1991 | SUENDERMANN R.O. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................

& : Mitglied der gleichen Patentfamilie, übereinstimmendes Dokument

EPO FORM 1503 03.82 (P0403)